# EUROPEAN PATENT SPECIFICATION

(11) **EP 2 445 204 B1**
(45) Date of publication and mention of the grant of the patent: **21.03.2018**
(21) Application number: 10803860.5
(22) Date of filing: 13.06.2010
(51) Int. Cl.: H04N 5/76

(54) **METHOD AND SYSTEM FOR VIDEO-RECORDING RECOVERY**
VERFAHREN UND SYSTEM ZUR WIEDERHERSTELLUNG VON VIDEOAUFZEICHNUNGEN
PROCÉDÉ ET SYSTÈME DE REPRISE D ENREGISTREMENT VIDÉO

(30) Priority: 27.07.2009 CN 200910150198
(43) Date of publication of application: 25.04.2012
(73) Proprietor: ZTE Corporation, Shenzhen, Guangdong 518057 (CN)
(72) Inventor: WU, Tianjing, Shenzhen Guangdong 518057 (CN)
(74) Representative: Manitz Finsterwald Patentanwälte PartmbB
(86) International application number: PCT/CN2010/073937
(87) International publication number: WO 2011/012027

(56) References cited:
- EP-A2- 1 617 661
- WO-A1-01/13637
- CN-A- 1 798 302
- CN-A- 101 127 894
- CN-A- 101 198 037
- CN-A- 101 330 596
- CN-A- 101 610 402
- JP-A- 2005 311 563
- JP-A- 2007 259 429
- US-A1- 2004 078 610
- US-A1- 2005 160 308
- US-A1- 2008 040 750

## Description

### Technical Field

The present invention belongs to the technical field of video monitoring, and relates to a method and system for resuming interrupted video recording in a video monitoring process.

### Background Art

Recently, as the network technology develops continuously, the video monitoring service has drawn wide attention. This new value-added service for remote transmission and management of images based on a wideband network or a mobile network has been accepted by more and more users. The video monitoring service is mainly intended to provide services including video real-time watching, cloud mirror control operation, video recording storage and management as well as alarm linkage notification for the users, and the users can monitor the monitory point all day at any time in any place.

With the constant perfection of the service and the increase of users, the stability and continuity of the system also become more and more important. Video recording, as one of the core functions of the monitoring system, needs to be enhanced on perfection and stability of functions even more. However, the demand of automatically resuming the previous state becomes more and more urgent in various cases of normal and abnormal interruptions such as system upgrading, power failure restart and down.

A common video monitoring recording can only implement basic functions such as video playing, formulating and sending a video-recording task and completion processing of a video-recording task, but has deficiencies in processing and resuming in abnormal cases such as interruption of a recording task or processing interruption when issuing a video-recording task, which will be bound to cause loss of video recording files, and thus generating more severe impact on the client.

WO 01/13637 (22 February 2001) discloses a digital video management system which provides live digital video signals from a number of cameras to a number of client terminals, via a computer communications network, in real time.

US 2005/160308 A1 (21 July 2005) discloses a method for DVR (digital video recorder) recovery from interruptions.

US 2004/078610 A1 (22 April 2004) discloses a PVR portion recording image data in an HDD which is controlled by a sub-microcomputer.

EP 1617661 A2 (18 January 2006) discloses a device for receiving an analogue or digital signal which is provided with a processor managing operation of the device, a memory, a signal loss management block, a block storing information on a recording process in the memory and a television signal recording management block.

US 2008/040750 (14 February 2008) discloses a method for receiving a request to create a program event to record a program from a broadcast start time through a broadcast end time on a broadcast channel.

### Summary of the Invention

The technical problem to be solved in the present invention is to provide a method and system for resuming interrupted video recording during video monitoring so as to avoid loss of original video-recording tasks in the cases of power failure, halt and upgrading. The method and system according to the present invention are defined in the independent claims.

A method for resuming video recording comprises:
a video monitoring system, after being started, scanning all video-recording tasks in a video-recording task table, establishing a new video-recording task for an interrupted video-recording task which is non-overdue and is under a recording state, and sending the newly established video-recording task to a streaming media server, wherein, planned starting time of the newly established video-recording task is current time, and planned ending time is planned ending time of the interrupted video-recording task which is non-overdue and is under a recording state; and
after receiving the video-recording task, the streaming media server controlling a corresponding video-recording equipment to start recording.

The above method may further comprise:
the video monitoring system deleting video-recording tasks that are overdue and are under a to-be-recorded state during a process of scanning the video-recording task table.

The above method may further comprise:
for the interrupted video-recording task that is non-overdue and is under a recording state, the video monitoring system also initiating an abnormity inquiry request flow to the streaming media server to inquire a completion status of the video-recording task.

The above method may further comprise: during the process of scanning the video-recording task table, the video monitoring system directly initiating an abnormity inquiry request flow to the streaming media server for a video-recording task that is overdue and is under a recording state.

The video monitoring system is provided with a first threshold value;
the step of establishing a new video-recording task for an interrupted video-recording task which is non-overdue and is under a recording state comprises:
establishing a new video-recording task for a video-recording task which is non-overdue and is under a recording state and a difference between the planned ending time of which and the current time is greater than or equal to the first threshold value.

The above method further comprises:
after the step of scanning all video-recording tasks in the video-recording task table is completed, starting to scan video-recording plans in a video-recording plan table, and sending a video-recording plan whose planned starting time is earlier than the current and which is non-overdue to the video-recording task table.

The method further comprises: providing a second threshold value in the video monitoring system;
during the process of scanning all video-recording plans in the video-recording plan table, sending a video-recording plan whose planned starting time is later than the current time and a difference between the planned starting time of which and the current time is smaller than or equal to the second threshold value to the video-recording task table.

The method further comprises: providing a third threshold value in the video monitoring system;
the step of sending a video-recording plan whose planned starting time is earlier than the current time and which is non-overdue to the video-recording task table comprising: sending a video-recording plan whose planned starting time is earlier than the current time, which is non-overdue and a difference between the planned ending time of which and the current time is greater than or equal to the third threshold value to the video-recording task table.

The video-recording task that is non-overdue is a video-recording task whose planned ending time is later than the current time.

The video-recording plan that is non-overdue is a video-recording plan whose planned ending time is later than the current time.

A system for resuming video recording comprises: a storage module, a scanning module, a video-recording task establishing module and a task sending module, wherein,
the storage module is configured to store a video-recording task table;
the scanning module is configured to scan all video-recording tasks in the video-recording task table that is stored in the storage module after a video monitoring system is started, and if a certain video-recording task is determined to be an interrupted video-recording task that is non-overdue and is under a recording state, send an establishing command, which carries a planned ending time of the video-recording task, to the video-recording task establishing module;
the video-recording task establishing module is configured to, after receiving the establishing command, establish a new video-recording task according to the planned ending time carried in the establishing command and current system time, and then send the newly established video-recording task to the task sending module;
the task sending module is configured to send the newly established video-recording task to a streaming media server.

The scanning module is further configured to delete video-recording tasks that are overdue and are under a to-be-recorded state during a process of scanning the video-recording task table.

The storage module is further configured to store a first threshold value;
the scanning module is configured to send an establishing command to the video-recording task establishing module after scanning a video-recording task which is non-overdue and is under a recording state and a difference between the planned ending time of which and the current time is greater than or equal to the first threshold value.

The system further comprises a video-recording plan scheduling module;
the storage module is further configured to store a video-recording plan table;
the scanning module is further configured to scan video-recording plans in the video-recording plan stable after completing scanning all video-recording tasks in the video-recording task table, and if a certain video-recording plan whose starting time is earlier than the current time and which is non-overdue is scanned, send a scheduling command to the video-recording plan scheduling module;
the video-recording plan scheduling module is configured to, after receiving the scheduling command, send the video-recording plan to the video-recording task table.

The system is provided with a second threshold value;
the scanning module is further configured to send a scheduling command to the video-recording plan scheduling module when scanning a certain video-recording plan which is non-overdue, the planned starting time of which is later than the current time and a difference between the planned starting time of which and the current time is smaller than or equal to the second threshold value.

The system is provided with a third threshold value;
the scanning module is further configured to send a scheduling command to the video-recording plan scheduling module when scanning a video-recording plan whose planned starting time is earlier than the current time, which is non-overdue and a difference between the planned ending time of which and the current time is greater than or equal to the third threshold value.

The present invention has the following advantages over the common method for monitoring and video recording:
connection processing for a service that is currently being recorded in the cases such as power failure, restart and upgrading is added, which ensures integrity and continuity of the video-recording files in terms of software; inquiry of abnormal video-recording files is initiatively implemented in time, thus avoiding loss of video-recording files caused by occurrence of the above cases. By means of resuming an interrupted video-recording task, the continuity of the service is ensured, the stability of the system is protected, and the abnormality processing capability of the platform is improved.

### Brief Description of Drawings

FIG. 1 illustrates the network structure according to an example of the present invention.
FIG. 2 is a flowchart of the method for resuming interrupted video-recording during the process of video monitoring according to an example of the present invention.
FIG. 3 illustrates the structure of the video monitoring system according to an example of the present invention.

### Preferred Embodiments of the Invention

The technical scheme of the present invention will be further described in detail below with reference to the drawings and the examples.

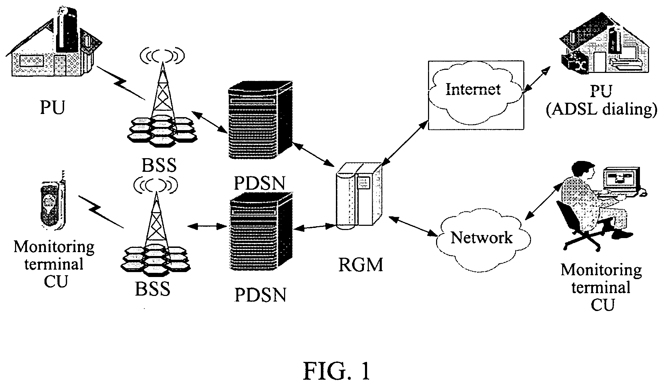

FIG. 1 illustrates the network structure according to the present invention. A camera is connected with the network through a Peripheral Unit (PU), which may be a mobile device or a fixed device, and a Client Unit (CU) can view the video or recording by connecting to a Register Manager System (RGM) of a public network through a mobile network or a fixed network.

All existing video monitoring systems store two tables: a video-recording plan table and a video-recording task table. The video-recording plan table is set by the user, and it stores the planned starting time and planned ending time and so on of each video-recording plan that are set by the user; the video-recording task table is dynamically updated by the video monitoring system according to the video-recording plans in the video-recording plan table, and the video-recording task table stores information including the planned starting time, planned ending time and the current video recording state of each video-recording task, and the like. After a video-recording task is finished, the video monitoring system will delete the video-recording task from the video-recording task table.

The basis concept of the method of the present invention is as follows: after the video monitoring system is started, the video monitoring system scanning each video-recoding task in the video-recoding task table, and establishing a new video-recoding task for the video-recoding task which is non-overdue and is under a recording state, and sending the newly established video-recoding task to the streaming media server, wherein, the planned starting time of the newly established video-recording task is the current time, and the planned ending time is a planned ending time of the video-recording task which is non-overdue and is under a recording state; after receiving the video-recording task, the streaming media server controlling a corresponding video-recording equipment to start recording. Wherein, the video-recoding task that is non-overdue is a video-recoding task whose planned ending time is later than the current time.

In addition, the video monitoring system may delete the video-recording tasks that are overdue and are under a to-be-recorded state during the process of scanning the video-recording task table.

For the video-recording task that is non-overdue and is under a recording state, the video monitoring system, besides establishing a new video-recording task, also initiates an abnormity inquiry request flow to the streaming media server to inquire a completion status of the video-recording task; the video monitoring system directly initiates an abnormity inquiry request flow to the streaming media server for a video-recording task that is overdue and is under a recording state.

In order to ensure that video-recoding resources are not wasted, the video monitoring system may be provided with a first threshold value; then, establishing a new video-recoding task for the video-recoding task which is non-overdue and is under a recording state means: establishing a new video-recording task for a video-recording task which is non-overdue and is under a recording state and a difference between the planned ending time of which and the current time is greater than or equal to the first threshold value.

Since the video monitoring system also stores a video-recording plan table, after the step of scanning all video-recording tasks in the video-recording task table is completed, scanning of all video-recording plans in the video-recording plan table is started, and a video-recording plan whose planned starting time is earlier than the current time and which is non-overdue is sent to the video-recording task table. Wherein, the video-recording plan that is non-overdue is a video-recording plan whose planned ending time is later than the current time.

Similarly, in order to ensure that video-recoding resources are not wasted, the video monitoring system is provided with a second threshold value;
during the process of scanning all video-recording plans in the video-recording plan table, a video-recording plan is sent to the video-recording task table, wherein, planned starting time of the video-recording plan is later than the current time and the difference between the planned starting time of the video-recording plan and the current time is smaller than or equal to the second threshold value.

In addition, the video monitoring system is provided with a third threshold value; then the above sending a video-recording plan whose planned starting time is earlier than the current time and which is non-overdue to the video-recording task table means: sending a video-recording plan whose planned starting time is earlier than the current time, which is non-overdue and a difference between the planned ending time of which and the current time is greater than or equal to the third threshold value to the video-recording task table.

Description will be further made below by an application example of the present invention.

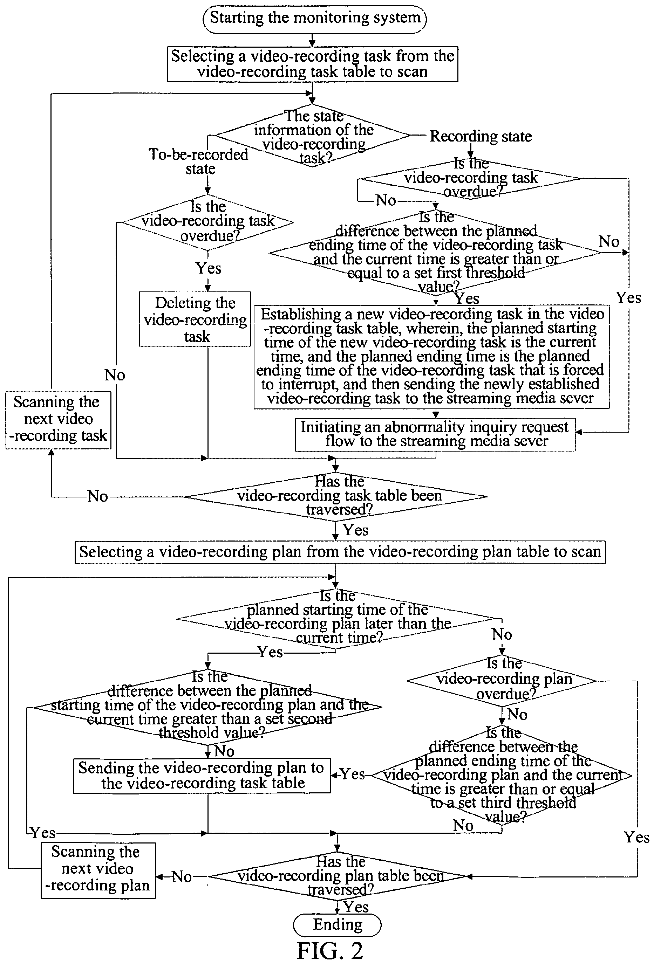

As shown in FIG. 2, the method for resuming interrupted video recording during the process of video monitoring comprises the following steps:
step one, at each time the monitoring system is started, triggering a video recoding state detecting procedure, and selecting a video-recording task from the video-recording task table to scan;
step two, judging the current state of the video-recording task according to the state information of the video-recording task, and if the state is a to-be-recorded state, proceeding to step three; otherwise, proceeding to step five;
step three, judging whether the video-recording task is overdue or not (i.e., judging whether the planned ending time of the video-recording task is earlier than the current time), and if yes, deleting the video-recording task; otherwise, proceeding to step four;
step four, judging whether the video-recording task table has been traversed, and if yes, proceeding to step six; otherwise, scanning the next video-recording task, and executing step two;
step five, if the current video-recording task is under a recording state, it indicates that this task is a forced interrupted task, in which case resumption is needed. The process of resumption comprises: firstly judging whether the video-recording task is overdue or not, and if it is non-overdue and the difference between the planned ending time of the video-recording task and the current time is greater than or equal to a set first threshold value (for example, 1 minute), establishing a new video-recording task in the video-recording task table, wherein the planned starting time of the newly established video-recording task is the current time, and the planned ending time is the planned ending time of the interrupted video-recording task, and then sending the newly established video-recording task to the streaming media server, and initiating an abnormity inquiry request flow to the streaming media server to inquire a completion status of the interrupted video-recording task, and executing step four; if the video-recording task is overdue, or the video-recording task is non-overdue but the difference between its planned ending time and the current time is smaller than a set first threshold value, then directly initiating an abnormity inquiry request flow to the streaming media server, and then executing step four;
step six, selecting a video-recording plan from the video-recording plan table to scan;
step seven, judging whether the planned starting time of the video-recording plan is later than the current time, if yes, executing step eight, otherwise, executing step ten;
step eight, judging whether the difference between the planned starting time of the video-recording plan and the current time is greater than a set second threshold value, if yes, executing step nine; otherwise, sending the video-recording plan to the video-recording task table;
step nine, judging whether the video-recording plan table has been traversed, if yes, ending; otherwise, scanning the next video-recording plan and executing step seven;
step ten, judging whether this video-recording plan is overdue (i.e., judging whether the planned ending time of the video-recording plan is earlier than the current time), if yes, executing step nine; otherwise, judging whether the difference between the planned ending time of the video-recording plan and the current time is greater than or equal to a set third threshold value, if yes, sending the video-recording plan to the video-recording task table, and executing step nine; otherwise, executing step nine.

Wherein, the abnormality inquiry request flow in the above step five comprises the following steps:
a video-recording module in a RGM initiating an abnormality inquiry request message to the streaming media server based on the interface in the design scheme, and the streaming media server checking the current recording state of the video-recording task after receiving the inquiry request message and reporting the current recording information of the video-recording task to the video-recording module in the RGM through the set reporting interface; after receiving the reported message, the RGM performing a series of operations including deleting the video-recording task, writing memory database, writing file synchronization and so on in the video-recording task table according to the content of the message.

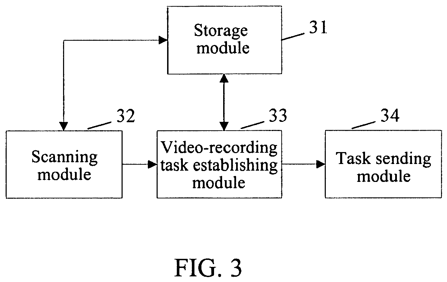

In addition, the present invention further provides a system for resuming interrupted video recording in a video monitoring process, as shown in FIG. 3, comprising: a storage module 31, a scanning module 32, a video-recording task establishing module 33 and a task sending module 34.

The storage module 31 is used to store a video-recording task table.

The scanning module 32 is used to scan all video-recording tasks in the video-recording task table that is stored in the storage module 31 after a video monitoring system is started, and if it is judged that a certain video-recording task is an interrupted video-recording task that is non-overdue and is under a recording state, send an establishing command, which carries a planned ending time of the video-recording task, to the video-recording task establishing module 33; the scanning module 32 is also used to delete video-recording tasks that are overdue and are under a to-be-recorded state during a process of scanning the video-recording task table.

The video-recording task establishing module 33 is configured to, after receiving the establishing command, establish a new video-recording task according to the planned ending time carried in the establishing command and the current system time, and then send the newly established video-recording task to the task sending module 34.

The task sending module 34 sends the newly established video-recording task to the streaming media server.

The storage module 31 stores a first threshold value; the scanning module 32 being used to send an establishing command to the video-recording task establishing module 33 after scanning a video-recording task which is non-overdue and is under a recording state means: the scanning module 32 sending an establishing command to the video-recording task establishing module 33 after scanning a video-recording task which is non-overdue and is under a recording state and a difference between the planned ending time of which and the current time is greater than or equal to the first threshold value.

The above system further comprises a video-recording plan scheduling module; the storage module 31 also stores a video-recording plan table.

The scanning module 32 is used to scan each video-recording plan in the video-recording plan stable after completing scanning all video-recording tasks in the video-recording task table, and if a certain video-recording plan whose starting time is earlier than the current time and which is non-overdue is scanned, send a scheduling command to the video-recording plan scheduling module,

The video-recording plan scheduling module is used to, after receiving the scheduling command, send the video-recording plan to the video-recording task table.

The video monitoring system is further provided with a second threshold value; the scanning module 32 is further used to send a scheduling command to the video-recording plan scheduling module when scanning a certain video-recording plan which is non-overdue, the planned starting time of which is later than the current time and where a difference between the planned starting time and the current time is smaller than or equal to the second threshold value.

The video monitoring system is provided with a third threshold value; the scanning module 32 being used to send a scheduling command to the video-recording plan scheduling module when scanning a certain video-recording plan whose planned starting time is earlier than the current time and which is non-overdue means: the scanning module 32 sending a scheduling command to the video-recording plan scheduling module when scanning a video-recording plan whose planned starting time is earlier than the current time, which is non-overdue and a difference between the planned ending time of which and the current time is greater than or equal to the third threshold value.

The implementation model of the present invention not only is applicable to the method for judging and processing service state resumption of interrupted video monitoring service recording, but also may be applied to other fields requiring software service state resumption after simple deformation.

Of course, the present invention may have many other examples, and a person having ordinary skill in the art can make various corresponding modifications and transformations according to the present invention without departing from the essence of the present invention defined by the claims of the present invention.

### Industrial Applicability

In the present invention, connection processing for a service that is currently being recorded in the cases such as power failure, restart and upgrading is added, which ensures integrity and continuity of the video-recording files in terms of software; inquiry of abnormal video-recording files is initiatively implemented in time, thus avoiding loss of video-recording files caused by occurrence of the above cases. By means of resumption processing of an interrupted video-recording task, the continuity of the service is ensured, the stability of the system is protected, and the abnormality processing capability of the platform is improved.

## Claims

1. A method for resuming video recording for video monitoring, comprising:
storing a video-recording plan table and a video-recording task table;
setting a first threshold value and a third threshold value in a video monitoring system;
after the video monitoring system being started, the video monitoring system scanning all video-recording tasks in the video-recording task table which stores a current video recording state of each video-recording task, if a video-recording task is under a recording state, determining that the video-recording task is an interrupted video-recording task due to an interruption, establishing a new video-recording task for the interrupted video-recording task when the interrupted video-recording task is non-overdue and under the recording state and a difference between a planned ending time of the interrupted video-recording task and a current time is greater than or equal to the first threshold value, and sending the new video-recording task to a streaming media server, wherein a planned starting time of the new video-recording task is the current time, and a planned ending time of the new video-recording task is the planned ending time of the interrupted video-recording task which is non-overdue and is under a recording state;
after the step of scanning all video-recording tasks in the video-recording task table is completed, starting to scan video-recording plans in the video-recording plan table, and sending a video-recording plan to the video-recording task table when a planned starting time of the video-recording plan is earlier than the current time and the video-recording plan is non-overdue and a difference between the planned ending time of the video-recording plan and the current time is greater than or equal to the third threshold value to the video-recording task table;
after receiving the new video-recording task, the streaming media server controlling a corresponding video-recording equipment to start recording; and
wherein the video-recording task that is non-overdue is a video-recording task with the planned ending time being later than the current time; and
wherein the video-recording plan that is non-overdue is a video-recording plan with the planned ending time being later than the current time.

2. The method according to claim 1, further comprising:
the video monitoring system deleting video-recording tasks that are overdue and are under a to-be-recorded state during scanning the video-recording task table.

3. The method according to claim 1, further comprising:
for the interrupted video-recording task that is non-overdue and is under a recording state, the video monitoring system also initiating an abnormity inquiry request process to the streaming media server to inquire a completion status of the video-recording task.

4. The method according to claim 1, further comprising:
during the process of scanning the video-recording task table, the video monitoring system directly initiating an abnormity inquiry request process to the streaming media server for a video-recording task that is overdue and is under a recording state.

5. The method according to claim 1, further comprising:
providing a second threshold value in the video monitoring system;
during the process of scanning video-recording plans in the video-recording plan table, sending a video-recording plan to the video-recording task table when a planned starting time of the video-recording plan is later than the current time and when a difference between the planned starting time of the video-recording plan and the current time is smaller than or equal to the second threshold value.

6. A system for resuming video recording for video monitoring, comprising: a storage module (31), a scanning module (32), a video-recording task establishing module (33) and a task sending module (34) and a video-recording plan scheduling module, wherein
the storage module (31) is configured to store a video-recording task table and a video-recording plan table, and store a first threshold value and a third threshold value;
the scanning module (32) is configured to scan all video-recording tasks in the video-recording task table that is stored in the storage module after a video monitoring system is started, wherein the video-recording task table stores a current video recording state of each video-recording task, and if a video-recording task is under a recording state, the video-recording task is determined to be an interrupted video-recording task due to an interruption, and if the interrupted video-recording task is non-overdue and under the recording state and a difference between a planned ending time of the interrupted video-recording task and a current time is greater than or equal to the first threshold value, send an establishing command, which carries the planned ending time of the interrupted video-recording task, to the video-recording task establishing module (33);
the scanning module (32) is further configured to scan video-recording plans in the video-recording plan table after completing scanning all video-recording tasks in the video-recording task table, and to send a scheduling command to the video-recording plan scheduling module when a video-recording plan is non-overdue and has a starting time being earlier than the current time and a difference between the planned ending time of the video-recording plan and the current time is greater than or equal to the third threshold value;
the video-recording plan scheduling module is configured to, after receiving the scheduling command, send the video-recording plan to the video-recording task table;
the video-recording task establishing module (33) is configured to, after receiving the establishing command, establish a new video-recording task with a planned starting time being the current time and with a planned ending time being the planned ending time carried in the establishing command, and then send the new video-recording task to the task sending module (34);
the task sending module (34) is configured to send the new video-recording task to a streaming media server,
wherein the video-recording task that is non-overdue is a video-recording task with a planned ending time being later than the current time;
and wherein the video-recording plan that is non-overdue is a video-recording plan with the planned ending time being later than the current time.

7. The system according to claim 6, wherein
the system is provided with a second threshold value;
the scanning module (32) is further configured to send a scheduling command to the video-recording plan scheduling module when a video-recording plan scanned is non-overdue and has a planned starting time being later than the current time and when a difference between the planned starting time of the video-recording plan and the current time is smaller than or equal to the second threshold value.

## Patentansprüche

1. Verfahren zur Wiederaufnahme einer Videoaufzeichnung zur Videoüberwachung, das umfasst, dass:
eine Plantabelle zur Videoaufzeichnung und eine Aufgabentabelle zur Videoaufzeichnung gespeichert werden;
in einem Videoüberwachungssystem ein erster Schwellenwert und ein dritter Schwellenwert eingestellt werden;
das Videoüberwachungssystem, nachdem es gestartet wurde, alle Aufgaben zur Videoaufzeichnung in der Aufgabentabelle zur Videoaufzeichnung, welche einen aktuellen Zustand einer Videoaufzeichnung von jeder Aufgabe zur Videoaufzeichnung speichert, untersucht, wenn sich eine Aufgabe zur Videoaufzeichnung in einem Aufzeichnungszustand befindet, aufgrund einer Unterbrechung feststellt, dass die Aufgabe zur Videoaufzeichnung eine unterbrochene Aufgabe zur Videoaufzeichnung ist, eine neue Aufgabe zur Videoaufzeichnung für die unterbrochene Aufgabe zur Videoaufzeichnung erstellt, wenn die unterbrochene Aufgabe zur Videoaufzeichnung nicht überfällig ist und sich im Aufzeichnungszustand befindet und eine Differenz zwischen einem geplanten Endzeitpunkt der unterbrochenen Aufgabe zur Videoaufzeichnung und einem aktuellen Zeitpunkt größer oder gleich dem ersten Schwellenwert ist, und die neue Aufgabe zur Videoaufzeichnung an einen Streaming Media Server sendet, wobei ein geplanter Startzeitpunkt der neuen Aufgabe zur Videoaufzeichnung der aktuelle Zeitpunkt ist und ein geplanter Endzeitpunkt der neuen Aufgabe zur Videoaufzeichnung der geplante Endzeitpunkt der unterbrochenen Aufgabe zu Videoaufzeichnung ist, welche nicht überfällig ist und sich im Aufzeichnungszustand befindet;
nachdem der Schritt des Untersuchens aller Aufgaben zur Videoaufzeichnung in der Aufgabentabelle zur Videoaufzeichnung abgeschlossen wurde, mit dem Untersuchen von Plänen zur Videoaufzeichnung in der Plantabelle zur Videoaufzeichnung begonnen wird und ein Plan zur Videoaufzeichnung an die Aufgabentabelle zur Videoaufzeichnung gesendet wird, wenn ein geplanter Startzeitpunkt des Plans zur Videoaufzeichnung früher als der aktuelle Zeitpunkt ist und der Plan zur Videoaufzeichnung nicht überfällig ist und eine Differenz zwischen dem geplanten Endzeitpunkt des Plans zur Videoaufzeichnung und dem aktuellen Zeitpunkt größer oder gleich dem dritten Schwellenwert für die Aufgabentabelle zur Videoaufzeichnung ist;
der Streaming Media Server nach dem Empfangen der neuen Aufgabe zur Videoaufzeichnung eine entsprechende Ausrüstung zur Videoaufzeichnung steuert, um das Aufzeichnen zu starten; und
wobei die Aufgabe zur Videoaufzeichnung, die nicht überfällig ist, eine Aufgabe zur Videoaufzeichnung ist, bei der der geplante Endzeitpunkt später als der aktuelle Zeitpunkt ist; und
wobei der Plan zur Videoaufzeichnung, der nicht überfällig ist, ein Plan zur Videoaufzeichnung ist, dessen geplanter Endzeitpunkt später als der aktuelle Zeitpunkt ist.

2. Verfahren nach Anspruch 1, das ferner umfasst, dass:
das Videoüberwachungssystem Aufgaben zur Videoaufzeichnung löscht, die überfällig sind und sich während der Untersuchung der Aufgabentabelle zur Videoaufzeichnung in einem zur Aufzeichnung vorgesehenen Zustand befinden.

3. Verfahren nach Anspruch 1, das ferner umfasst, dass:
das Videoüberwachungssystem für die unterbrochene Aufgabe zur Videoaufzeichnung, die nicht überfällig ist und sich in einem Aufzeichnungszustand befindet, außerdem einen Prozess zur Anforderung einer Abnormitätserforschung an dem Streaming Media Server einleitet, um einen Beendigungsstatus der Aufgabe zur Videoaufzeichnung zu erforschen.

4. Verfahren nach Anspruch 1, das ferner umfasst, dass:
das Videoüberwachungssystem während des Prozesses des Untersuchens der Aufgabentabelle zur Videoaufzeichnung einen Prozess zur Anforderung einer Abnormitätserforschung an dem Streaming Media Server für eine Aufgabe zur Videoaufzeichnung direkt einleitet, die überfällig ist und sich in einem Aufzeichnungszustand befindet.

5. Verfahren nach Anspruch 1, das ferner umfasst, dass:
ein zweiter Schwellenwert in dem Videoüberwachungssystem bereitgestellt wird;
während des Prozesses des Untersuchens von Plänen zur Videoaufzeichnung in der Plantabelle zur Videoaufzeichnung ein Plan zur Videoaufzeichnung an die Aufgabentabelle zur Videoaufzeichnung gesendet wird, wenn ein geplanter Startzeitpunkt des Plans zur Videoaufzeichnung später als der aktuelle Zeitpunkt ist und wenn eine Differenz zwischen dem geplanten Startzeitpunkt des Plans zur Videoaufzeichnung und dem aktuellen Zeitpunkt kleiner oder gleich dem zweiten Schwellenwert ist.

6. System zur Wiederaufnahme einer Videoaufzeichnung zur Videoüberwachung, umfassend: ein Speichermodul (31), ein Untersuchungsmodul (32), ein Modul (33) zum Erstellen von Aufgaben zur Videoaufzeichnung und ein Modul (34) zum Senden von Aufgaben und ein Modul zur Zeitplanung von Plänen zur Videoaufzeichnung, wobei
das Speichermodul (31) ausgestaltet ist, um eine Aufgabentabelle zur Videoaufzeichnung und eine Plantabelle zur Videoaufzeichnung zu speichern, und um einen ersten Schwellenwert und einen dritten Schwellenwert zu speichern;
das Untersuchungsmodul (32) ausgestaltet ist, um alle Aufgaben zur Videoaufzeichnung in der Aufgabentabelle zur Videoaufzeichnung, die in dem Speichermodul gespeichert ist, zu untersuchen, nachdem ein Videoüberwachungssystem gestartet wurde, wobei die Aufgabentabelle zur Videoaufzeichnung einen aktuellen Zustand der Videoaufzeichnung von jeder Aufgabe zur Videoaufzeichnung speichert, und wenn sich eine Aufgabe zur Videoaufzeichnung in einem Aufzeichnungszustand befindet, aufgrund einer Unterbrechung festgestellt wird, dass die Aufgabe zur Videoaufzeichnung eine unterbrochene Aufgabe zur Videoaufzeichnung ist, und wenn die unterbrochene Aufgabe zur Videoaufzeichnung nicht überfällig ist und sich in dem Aufzeichnungszustand befindet und eine Differenz zwischen einem geplanten Endzeitpunkt der unterbrochenen Aufgabe zur Videoaufzeichnung und einem aktuellen Zeitpunkt größer oder gleich dem ersten Schwellenwert ist, einen Erstellungsbefehl, der den geplanten Endzeitpunkt der unterbrochenen Aufgabe zur Videoaufzeichnung trägt, an das Modul (33) zum Erstellen einer Aufgabe zur Videoaufzeichnung zu senden;
das Untersuchungsmodul (32) ferner ausgestaltet ist, um Pläne zur Videoaufzeichnung in der Plantabelle zur Videoaufzeichnung nach Beendigung der Untersuchung aller Aufgaben zur Videoaufzeichnung in der Aufgabentabelle zur Videoaufzeichnung zu untersuchen, und um einen Zeitplanbefehl an das Modul zur Zeitplanung von Plänen zur Videoaufzeichnung zu senden, wenn ein Plan zur Videoaufzeichnung nicht überfällig ist und einen Startzeitpunkt aufweist, der früher als der aktuelle Zeitpunkt ist und eine Differenz zwischen dem geplanten Endzeitpunkt des Plans zur Videoaufzeichnung und dem aktuellen Zeitpunkt größer oder gleich dem dritten Schwellenwert ist;
das Modul zur Zeitplanung von Plänen zur Videoaufzeichnung ausgestaltet ist, um nach dem Empfangen des Zeitplanbefehls den Plan zur Videoaufzeichnung an die Aufgabentabelle zur Videoaufzeichnung zu senden;
das Modul (33) zum Erstellen einer Aufgabe zur Videoaufzeichnung ausgestaltet ist, um nach dem Empfangen des Erstellungsbefehls eine neue Aufgabe zur Videoaufzeichnung zu erstellen, wobei ein geplanter Startzeitpunkt der aktuelle Zeitpunkt ist und ein geplanter Endzeitpunkt der geplante Endzeitpunkt ist, der in dem Erstellungsbefehl befördert wurde, und um dann die neue Aufgabe zur Videoaufzeichnung an das Modul (34) zum Senden von Aufgaben zu senden;
das Modul (34) zum Senden von Aufgaben ausgestaltet ist, um die neue Aufgabe zur Videoaufzeichnung an einen Streaming Media Server zu senden,
wobei die Aufgabe zur Videoaufzeichnung, die nicht überfällig ist, eine Aufgabe zur Videoaufzeichnung ist, deren geplanter Endzeitpunkt später als der aktuelle Zeitpunkt ist;
und wobei der Plan zur Videoaufzeichnung, der nicht überfällig ist, ein Plan zur Videoaufzeichnung ist, dessen geplanter Endzeit später als der aktuelle Zeitpunkt ist.

7. System nach Anspruch 6, wobei
das System mit einem zweiten Schwellenwert ausgestattet ist;
das Untersuchungsmodul (32) ferner ausgestaltet ist, um einen Zeitplanbefehl an das Modul zur Zeitplanung von Plänen zur Videoaufzeichnung zu senden, wenn ein untersuchter Plan zur Videoaufzeichnung nicht überfällig ist und einen geplanten Startzeitpunkt aufweist, der später als der aktuelle Zeitpunkt ist, und wenn eine Differenz zwischen dem geplanten Startzeitpunkt des Plans zur Videoaufzeichnung und dem aktuellen Zeitpunkt kleiner oder gleich dem zweiten Schwellenwert ist.

## Revendications

1. Procédé pour la reprise d'un enregistrement vidéo pour la surveillance vidéo, comprenant les étapes consistant à :
stocker un tableau de plans d'enregistrement vidéo et un tableau de tâches d'enregistrement vidéo ;
fixer une première valeur seuil et une troisième valeur seuil dans un système de surveillance vidéo ;
après avoir démarré le système de surveillance vidéo, le système de surveillance vidéo scanne toutes les tâches d'enregistrement vidéo dans le tableau des tâches d'enregistrement vidéo qui stocke un état d'enregistrement vidéo actuel pour chaque tache d'enregistrement vidéo, si une tâche d'enregistrement vidéo est dans un état en cours d'enregistrement, déterminer que la tâche d'enregistrement vidéo est une tâche d'enregistrement vidéo interrompue en raison d'une interruption, établir une nouvelle tâche d'enregistrement vidéo pour la tâche d'enregistrement vidéo interrompu quand la tâche d'enregistrement vidéo interrompue n'est pas en retard et qu'une différence entre un temps de terminaison planifié de la tâche d'enregistrement vidéo interrompue et un temps actuel est supérieure ou égale à la première valeur seuil, et envoyer la nouvelle tâche d'enregistrement vidéo à un serveur de média en streaming, dans lequel un temps de démarrage planifié de la nouvelle tâche d'enregistrement vidéo est le temps actuel, et un temps de terminaison planifié de la nouvelle tâche d'enregistrement vidéo est le temps de terminaison planifié de la tâche d'enregistrement vidéo interrompue qui n'est pas en retard et qui se trouve dans un état d'enregistrement ;
après que l'étape consistant à scanner toutes les tâches d'enregistrement vidéo dans le tableau des tâches d'enregistrement vidéo est terminée, démarrer pour scanner les plans d'enregistrement vidéo dans le tableau de plans d'enregistrement vidéo, et envoyer un plan d'enregistrement vidéo à la table des tâches d'enregistrement vidéo quand un temps de départ planifié du plan d'enregistrement vidéo et plus tôt que le temps actuel et le plan d'enregistrement vidéo n'est pas en retard et qu'une différence entre le temps de terminaison planifié du plan d'enregistrement vidéo et le temps actuel est supérieure ou égale à la troisième valeur seuil, vers le tableau des tâches d'enregistrement vidéo ;
après la réception de la nouvelle tâche d'enregistrement vidéo, le serveur de média en streaming commande un équipement d'enregistrement vidéo correspondant pour démarrer l'enregistrement ; et
dans lequel la tâche d'enregistrement vidéo qui n'est pas en retard est une tache d'enregistrement vidéo avec un temps de terminaison planifié qui est plus tard que le temps actuel ; et
dans lequel le plan d'enregistrement vidéo qui n'est pas en retard est un plan d'enregistrement vidéo avec un temps de terminaison planifié qui est plus tard que le temps actuel.

2. Procédé selon la revendication 1, comprenant en outre l'opération selon laquelle
le système de surveillance vidéo efface les tâches d'enregistrements vidéo qui sont en retard et qui sont dans un état "à enregistrer" pendant le scannage du tableau des tâches d'enregistrement vidéo.

3. Procédé selon la revendication 1, comprenant en outre :
pour la tâche d'enregistrement vidéo interrompue qui n'est pas en retard et qui est dans un état d'enregistrement, l'opération selon laquelle le système de surveillance vidéo démarre également un processus de requête de recherche d'anomalie au serveur média en streaming pour s'enquérir d'un état de terminaison de la tâche d'enregistrement vidéo.

4. Procédé selon la revendication 1, comprenant en outre :
pendant le processus de scannage du tableau des tâches d'enregistrement vidéo, l'opération selon laquelle le système de surveillance vidéo démarre un processus de requête de recherche d'anomalie au serveur média en streaming pour une tâche d'enregistrement vidéo qui est en retard et qui est dans un état d'enregistrement.

5. Procédé selon la revendication 1, comprenant en outre :
l'opération consistant à prévoir une seconde valeur seuil dans le système de surveillance vidéo ;
pendant le processus de scannage des plans d'enregistrement vidéo dans le tableau des plans d'enregistrement vidéo, l'opération consistant à envoyer un plan d'enregistrement vidéo au tableau des tâches d'enregistrement vidéo quand un temps de démarrage planifié du plan d'enregistrement vidéo est plus tard que le temps actuel et quand une différence entre le temps de démarrage planifié du plan d'enregistrement vidéo et le temps actuel est inférieure ou égale à la seconde valeur seuil.

6. Système pour reprendre un enregistrement vidéo pour la surveillance vidéo comprenant :
un module de stockage (31), un module de scannage (32), un module d'établissement de tâche d'enregistrement vidéo (33) et un module d'envoi de tâche (34) et un module de planification de plan d'enregistrement vidéo, dans lequel
le module de stockage (31) est configuré pour stocker un tableau des tâches d'enregistrement vidéo et un tableau des plans d'enregistrement vidéo, et pour stocker une première valeur seuil et une troisième valeur seuil ;
le module de scannage (32) est configuré pour scanner toutes les tâches d'enregistrement vidéo dans le tableau des tâches d'enregistrement vidéo qui est stocké dans le module de stockage après avoir démarré un système de surveillance vidéo, dans lequel le tableau des tâches d'enregistrement vidéo stocke un état d'enregistrement vidéo actuel de chaque tâche d'enregistrement vidéo et, si une tâche d'enregistrement vidéo est dans un état en cours d'enregistrement, la tâche d'enregistrement vidéo est déterminée comme étant une tâche d'enregistrement vidéo interrompue en raison d'une interruption et, si la tâche d'enregistrement vidéo n'est pas en retard et se trouve sous l'état d'enregistrement et qu'une différence entre un temps de terminaison planifié de la tâche d'enregistrement vidéo interrompue et un temps actuel est supérieure ou égale à la première valeur seuil, pour envoyer un ordre d'établissement, qui porte le temps de terminaison planifié de la tâche d'enregistrement vidéo interrompue, au module d'établissement de tâche d'enregistrement vidéo (33) ;
le module de scannage (32) est en outre configuré pour scanner des plans d'enregistrement vidéo dans le tableau des plans d'enregistrement vidéo après avoir terminé le scannage de toutes les tâches d'enregistrement vidéo dans le tableau des tâches d'enregistrement vidéo, et pour envoyer un ordre de planification au module de planification des plans d'enregistrement vidéo quand un plan d'enregistrement vidéo n'est pas en retard et présente un temps de démarrage plus tôt que le temps actuel, et une différence entre le temps de terminaison planifié du plan d'enregistrement vidéo et le temps actuel est supérieure ou égale à la troisième valeur seuil ;
le module de planification des plans d'enregistrement vidéo est configuré pour, après réception de l'ordre de planification, envoyer le plan d'enregistrement vidéo au tableau des tâches d'enregistrement vidéo ; le module d'établissement de tâche d'enregistrement vidéo (33) est configuré pour, après réception de l'ordre d'établissement, établir une nouvelle tâche d'enregistrement vidéo avec un temps de démarrage planifié qui est le temps actuel et avec un temps de terminaison planifié qui est le temps de terminaison planifié porté dans l'ordre d'établissement, et ensuite envoyer la nouvelle tâche d'enregistrement vidéo au module d'envoi de tâches (34) ;
le module d'envoi de tâches (34) est configuré pour envoyer la nouvelle tâche d'enregistrement vidéo à un serveur média en streaming,
dans lequel la tâche d'enregistrement vidéo qui n'est pas en retard est une tâche d'enregistrement vidéo avec un temps de terminaison planifié qui est plus tard que le temps actuel ; et dans lequel le plan d'enregistrement vidéo qui n'est pas en retard est un plan d'enregistrement vidéo dont le temps de terminaison planifié est plus tard que le temps actuel.

7. Système selon la revendication 6, dans lequel
le système est doté d'une seconde valeur seuil ;
le module de scannage (32) est en outre configuré pour envoyer un ordre de planification au module de planification des plans d'enregistrement vidéo quant un plan d'enregistrement vidéo scanné n'est pas en retard et présente un temps de démarrage planifié qui est plus tard que le temps actuel et quand une différence entre le temps de démarrage planifié du plan d'enregistrement vidéo et le temps actuel est inférieure ou égale à la seconde valeur seuil.
